# EUROPÄISCHE PATENTSCHRIFT

(11) **EP 3 890 863 B1**
(45) Veröffentlichungstag und Bekanntmachung des Hinweises auf die Patenterteilung: **02.11.2022**
(21) Anmeldenummer: 19806222.6
(22) Anmeldetag: 20.11.2019
(51) Int. Cl.: B01D 29/15, B01D 36/00, B01D 29/11, F02M 37/24

(54) **VERFAHREN ZUM HERSTELLEN EINES WASSERABSCHEIDERS UND WASSERABSCHEIDER**
METHOD FOR PRODUCING A WATER SEPARATOR, AND WATER SEPARATOR
PROCÉDÉ DE FABRICATION D'UN SÉPARATEUR D'EAU ET SÉPARATEUR D'EAU

(30) Priorität: 03.12.2018 DE 102018130648
(43) Veröffentlichungstag der Anmeldung: 13.10.2021
(73) Patentinhaber: MANN+HUMMEL GmbH, 71636 Ludwigsburg (DE)
(72) Erfinder: DIETZ, Eugen, 74357 Bönnigheim (DE); PFLÜGER, Frank, 74343 Sachsenheim (DE); RAZGANI, Idriss, Tanger, 90060 (MA)
(74) Vertreter: Mann + Hummel Intellectual Property
(86) Internationale Anmeldenummer: PCT/EP2019/081989
(87) Internationale Veröffentlichungsnummer: WO 2020/114781

(56) Entgegenhaltungen:
- DE-A1- 10 063 881
- DE-A1-102014 003 273
- DE-A1-102015 003 100
- DE-A1-102016 010 778
- US-A1- 2014 326 683

## Beschreibung

### Technisches Gebiet

Die Erfindung betrifft ein Verfahren zur Herstellung eines Wasserabscheiders und einen Wasserabscheider.

### Stand der Technik

Wasserabscheider werden beispielsweise als Endabscheider in Kraftstofffiltern eingesetzt. Bekannte Wasserabscheider weisen ein ringförmiges, hydrophobes Sieb auf, das an der Innenseite eines Spritzgussteils gehalten ist. Zur Herstellung solcher Wasserabscheider wird nach dem Stand der Technik das Sieb in ein Werkzeug eingelegt und in dem Werkzeug fixiert. Sodann wird das Sieb mit Kunststoff umspritzt, d. h. der Kunststoff wird an die Außenseite des Siebs angespritzt. Aufgrund von Beschränkungen der Werkzeugtechnik (Erfordernis des Fixierens des Siebs im Werkzeug und Entformung von maximal zwei Kernen) kann maximal eine in Umfangsrichtung umlaufende Querrippe zur Stabilisierung des Siebs ausgebildet werden. Für eine ausreichende mechanische Stabilität wird zudem je nach Größe des Wasserabscheiders eine gewisse Anzahl an Längsrippen benötigt. Durch die Querrippe und die Längsrippen, die außenseitig auf dem Sieb aufsitzen, wird bei der üblichen Durchströmung von radial außen nach radial innen eine effektive (wirksame) Abscheidefläche des Siebs verringert. Dies verschlechtert das Wasserabscheidevermögen.

Aus DE 100 63 881 A1 ist ein Filterelement bekannt, das über einen Stützkörper verfügt, um welchen ein Filtermedium gewickelt ist. Das Filtermedium besteht aus einem schweißbaren Material und ist mit zwei Radialschweißnähten und einer Längsschweißnaht auf dem Stützkörper dichtend fixiert. Beim Verschweißen des Filtermediums mit dem Stützkörper wird das Filtermedium im Bereich der Schweißnaht verdichtet.

WO 2015/135667 A1 beschreibt ein Siebfilterelement für ein Kraftstofffilterelement mit einer mehrstufigen Wassersabscheideeinrichtung, umfassend einen rohrförmigen Siebfilter und ein Stützrohr, das den Siebfilter in einer zur Längsachse des Siebfilterelements radialen Richtung umgreift. An dem Stützrohr sind nach radial innen weisende Verbindungsstege angeformt, über die das Stützrohr mit dem Siebfilter unter Ausbildung eines Zwischenraums verbunden ist. Der Siebfilter kann mit den Verbindungsstegen verschweißt oder in das Kunststoffmaterial der Verbindungsstege eingebettet sein. Radial außen können an dem Stützrohr eine erste und eine zweite Coalescerlage der Wasserabscheideeinrichtung angeordnet sein. Radial außerhalb der Coalescerlagen kann ein Filterbalg angeordnet sein. Auch bei diesem Siebfilterelement wird die zur Wasserabscheidung wirksame (effektive) Fläche des Siebfilters durch die Verbindungsstege, an denen dieser gehalten ist, verringert.

Weitere Wasserabscheider mit einer eine Längsachse ringförmig umgebenden Stützstruktur und einem außenumfangsseitig daran angeordneten Koaleszenzmedium sind aus der DE 10 2015 003 100 A1, DE 10 2016 010 778 A1 und US 2014 / 326 683 A1 bekannt.

Es ist deshalb die Aufgabe der Erfindung, einen Wasserabscheider mit einer möglichst großen wirksamen Fläche eines Wasserabscheidemediums und ein Verfahren zum Herstellen eines solchen Wasserabscheiders anzugeben.

### Offenbarung der Erfindung

Diese Aufgabe wird durch ein Herstellverfahren gemäß Anspruch 1 und einen Wasserabscheider gemäß Anspruch 8 gelöst. Bevorzugte Verfahrensvarianten und Ausführungsformen sind in den jeweiligen Unteransprüchen und der Beschreibung angegeben.

### Erfindungsgemäße Herstellverfahren

Erfindungsgemäß ist ein Verfahren zum Herstellen eines Wasserabscheiders vorgesehen. Der Wasserabscheider ist vorzugsweise ein unten beschriebener erfindungsgemäßer Wasserabscheider. Das erfindungsgemäße Verfahren umfasst die Schritte
- Bereitstellen einer Stützstruktur, die eine Längsachse ringförmig umgibt,
- Bereitstellen eines hydrophoben Siebgewebes,
- Plastifizieren des Materials der Stützstruktur in radial zu der Längsachse außenseitigen Bereichen durch Ultraschall oder durch Laserstrahlung,
- Anordnen des Siebgewebes außenumfangseitig an der Stützstruktur und
- Eindrücken des Siebgewebes in die plastifizierten Bereiche.

Der Wasserabscheider ist für eine Durchströmung von radial außen nach radial innen vorgesehen. Indem das Siebgewebe außenumfangseitig (am Außenumfang) an der Stützstruktur angeordnet wird, bleibt ein möglichst großer Flächenanteil des Siebgewebes hydrophob wirksam. Nur in denjenigen Bereichen, in denen das Siebgewebe in die Stützstruktur eingedrückt wird, wird die wasserabscheidende Wirkung des Siebgewebes gemindert. Die Stützstruktur kann neben den Bereichen, in die das Siebgewebe eingebettet wird, noch weitere Stützbereiche aufweisen, die das Siebgewebe, insbesondere nach radial innen hin, abstützen, ohne dass jedoch diese Stützbereiche fest mit dem Siebgewebe verbunden werden, insbesondere ohne dass das Siebgewebe in diese Stützbereiche eingedrückt wird. Die Stützstruktur ist typischerweise im Wesentlichen rohrförmig mit großflächigen Durchbrüchen, beispielsweise in der Art eines Gitterrohrs, ausgebildet.

Das Plastifizieren kann vor oder nach dem Anordnen des Siebgewebes am Außenumfang der Stützstruktur erfolgen. Beim Plastifizieren kann das Material der Stützstruktur teilweise auch aufgeschmolzen, insbesondere verflüssigt, werden. Nach dem Eindrücken des Siebgewebes in die plastifizierten Bereiche erfolgt ein Verfestigen (Erkalten/Aushärten) des plastifizierten Materials. Es entsteht ein Formschluss zwischen dem Siebgewebe und der Stützstruktur. Durch das Plastifizieren des Materials der Stützstruktur und das Eindrücken des Siebgewebes kann das Siebgewebe mit der Stützstruktur verschweißt werden. Zusätzlich zu dem Formschluss kann ein Stoffschluss zwischen dem Siebgewebe und der Stützstruktur erzeugt werden. Zum Eindrücken des Siebgewebes kann ein Druckkörper, beispielsweise eine Walze, verwendet werden. Die Stützstruktur weist typischerweise außenumfangseitig einen thermoplastischen Kunststoff auf. Vorzugsweise besteht die gesamte Stützstruktur aus dem thermoplastischen Kunststoff. Die Stützstruktur kann als ein einstückiges Spritzgussteil ausgebildet sein. Insbesondere kann der Kunststoff Polyamid sein. Vorzugsweise ist der Kunststoff faserverstärkt, beispielsweise mit Glasfasern. Der thermoplastische Kunststoff ist besonders bevorzugt Polyamid 6 (PA6), Polyethylenterephthalat (PET) oder Polybutylenterephthalat (PBT), insbesondere mit einem Glasfaseranteil von maximal 35 %.

Das Material der Stützstruktur kann durch Ultraschall plastifiziert werden. Mittels Ultraschall (Ultraschallwellen) kann ein schnelles und effizientes Plastifizieren erfolgen. Vorzugsweise wird hierzu eine Rollsonotrode eingesetzt. Dies ermöglicht ein besonders schnelles Plastifizieren. Eine Schwingungsrichtung der Ultraschallwellen kann parallel oder, vorzugsweise, orthogonal zu den zu plastifizierenden Bereichen ausgerichtet sein.

Alternativ kann das Material der Stützstruktur durch Laserstrahlung plastifiziert werden. Beim Plastifizieren mittels Laserstrahlung kann eine besonders gleichmäßige und stabile Verbindung von Siebgewebe und Stützstruktur erhalten werden. Die Laserstrahlung kann linien-, flächen- oder punktförmig auf die Stützstruktur einwirken. Zum Erzeugen der Laserstrahlung kann ein Linien-, Flächen- oder Punktlaser eingesetzt werden.

Eine besonders vorteilhafte Weiterbildung des Verfahrens mit Plastifizieren durch Laserstrahlung ist dadurch gekennzeichnet, dass das Material des Siebgewebes für Laserstrahlung transparent ist, und dass die Laserstrahlung zum Plastifizieren des Materials der Stützstruktur durch das Siebgewebe hindurchtritt bzw. hindurchgeführt wird. Das Material des Siebgewebes ist mit anderen Worten für das eingesetzte (Laser-)Licht durchlässig. Das Material des Siebgewebes verfügt somit bezüglich des eingesetzten Laserlichts über ein kleineres Absorptionsvermögen, als das zu plastifizierende Material der Stützstruktur. Da das Siebgewebe für Laserstrahlung transparent ist, wird es beim Durchtritt der Laserstrahlung nicht oder nur geringfügig erwärmt. Das Siebgewebe wird insbesondere nicht an der Lasereintrittsfläche, sondern allenfalls in einem gegenüberliegenden Fügebereich (in dem das Siebgewebe mit der Stützstruktur in Kontakt steht) plastifiziert. Grundsätzlich wird bei dieser Weiterbildung des Verfahrens vor dem Plastifizieren das Siebgewebe zumindest bereichsweise außenumfangseitig an der Stützstruktur angeordnet.

Die Stützstruktur kann zwei ringförmige Endabschnitte und eine erste Längsrippe, die sich zwischen den Endabschnitten erstreckt, aufweisen. Das Verfahren ist dann in einer vorteilhaften Variante derart gestaltet, dass
- zunächst eine erste Längskante des Siebgewebes mit der ersten Längsrippe verbunden wird,
- sodann zwei gegenüberliegende Seitenkanten des Siebgewebes mit den Endabschnitten verbunden werden, und
- abschließend eine zweite Längskante des Siebgewebes mit der ersten Längsrippe verbunden wird.

Das Siebgewebe wird mithin zunächst mit seiner ersten Längskante an der ersten Längsrippe fixiert. Anschließend wird das Siebgewebe in Umfangsrichtung mit den Endabschnitten verbunden. Schließlich wird die zweite Längskante, typischerweise unmittelbar benachbart zu der ersten Längskante, mit der ersten Längsrippe verbunden. Auf diese Weise kann eine durchgängig umlaufende Verbindung von Siebgewebe und Stützstruktur erhalten werden. Zudem kann die Verbindung von Siebgewebe und Stützstruktur in einem kontinuierlichen Prozess erfolgen. Insbesondere kann das Siebgewebe zum Verbinden mit den Endabschnitten auf die Stützstruktur aufgewickelt werden. Dies erleichtert das faltenfreie Befestigten des Siebgewebes. Die Endabschnitte sind in Längsrichtung (entlang der Längsachse) voneinander beabstandet angeordnet. Die Längsrippe erstreckt sich typischerweise parallel zu der Längsachse. Das Verbinden der Längs- und Seitenkanten des Siebgewebes mit den Endabschnitten bzw. der Längsrippe der Stützstruktur erfolgt durch Plastifizieren dieser Bereiche der Stützstruktur und Eindrücken in die plastifizierten Bereiche. Das Eindrücken des Siebgewebes in die Endabschnitte kann durch eine Vorspannung des Siebgewebes erfolgen, insbesondere wobei das Siebgewebe unter Spannung auf die Stützstruktur aufgewickelt wird.

Für eine besonders bevorzugte Weiterbildung der vorgenannten Verfahrensvariante wird das Siebgewebe als Endlosgewebe bereitgestellt. Nach dem Verbinden der ersten Längskante des Siebgewebes mit der ersten Längsrippe der Stützstruktur wird ein das Siebgewebe des Wasserabscheiders bildender Abschnitt von dem Endlosgewebe unter Ausbildung der zweiten Längskante des Siebgewebes abgetrennt. Mit anderen Worten wird die erste Längskante des das Siebgewebe des Wasserabscheiders bildenden Abschnitts des Endlosgewebes mit der ersten Längsrippe verbunden, solange dieser Abschnitt des Endlosgewebes noch mit dem übrigen Teil des Endlosgewebes verbunden ist. Typischerweise wird das Siebgewebe nahezu vollständig (etwa über wenigstens 300°, insbesondere über wenigstens 330°) in Umfangsrichtung an den Endabschnitten der Stützstruktur befestigt, bevor der das Siebgewebe des Wasserabscheiders bildende Abschnitt von dem Endlosgewebe abgetrennt wird. Besonders bevorzugt wird das Siebgewebe in Umfangsrichtung vollständig an den Endabschnitten befestigt, bevor der das Siebgewebe des Wasserabscheiders bildende Abschnitt von dem Endlosgewebe abgetrennt wird. Von einer in Umfangsrichtung vollständigen Befestigung ist auszugehen, wenn sich die Verbindungslinien des Siebgewebes an den Endabschnitten jeweils von der ersten Längsrippe einmal um den (Außen-)Umfang des jeweiligen Endabschnitts herum wieder bis zu der ersten Längsrippe erstrecken. Unter einem Endlosgewebe wird ein Gewebe verstanden, dessen Länge wesentlich größer ist als die zum Abdecken des Außenumfangs einer Stützstruktur erforderliche Länge. Vorzugsweise ist das Endlosgewebe so bemessen, dass wenigstens 100, besonders bevorzugt wenigstens 1000, Wasserabscheider unter Abtrennung des jeweiligen Siebgewebes von dem Endlosgewebe hergestellt werden können. Die Verwendung eines Endlosgewebes ermöglicht eine besonders rationelle Fertigung einer Vielzahl von Wasserabscheidern. Es versteht sich, dass bei der wiederholten Durchführung dieser Verfahrensvariante, die unter Verwendung des Endlosgewebes noch herstellbare Anzahl von Wasserabscheidern kontinuierlich abnimmt und schließlich die genannten Zahlen der mit dem verbleibenden Rest des Endlosgewebes noch herstellbaren Wasserabscheider unterschritten werden. Das Endlosgewebe kann auf einer Spule bereitgestellt werden. Durch Ausüben eines Drehmoments auf die Spule kann eine zum Eindrücken des Siebgewebes erforderliche Spannung des Siebgewebes kontrolliert und mit einfachen Mitteln eingerichtet werden.

Die Erfindung betrifft auch ein Verfahren zur Herstellung einer Vielzahl von Wasserabscheidern durch wiederholte Durchführung eines oben beschriebenen Verfahrens mit einem als Endlosgewebe bereitgestellten Siebgewebe unter Verwendung desselben Endlosgewebes. Dieses Verfahren erlaubt eine wirtschaftliche Herstellung einer Vielzahl von Wasserabscheidern. Die das Siebgewebe des jeweils herzustellenden Wasserabscheiders bildenden Abschnitte werden nacheinander von dem Endlosgewebe abgetrennt. Beim Abtrennen des das Siebgewebe des aktuell herzustellenden Wasserabscheiders bildenden Abschnitts von dem Endlosgewebe wird typischerweise mit der Ausbildung der zweiten Längskante dieses Abschnitts auch die erste Längskante des das Siebgewebe des nachfolgend herzustellenden Wasserabscheiders bildenden Abschnitts des Endlosgewebes ausgebildet. Dies vermeidet den Anfall von Verschnitt des Endlosgewebes.

### Erfindungsgemäße Wasserabscheider

In den Rahmen der vorliegenden Erfindung fällt auch ein Wasserabscheider mit einer eine Längsachse ringförmig umgebenden Stützstruktur und mit einem hydrophoben Siebgewebe. Das Siebgewebe ist außenumfangseitig an der Stützstruktur angeordnet. Das Siebgewebe ist abschnittsweise in radial außen liegende Bereiche der Stützstruktur eingebettet. Mithin steht die gesamte Fläche des Siebgewebes außer den eingebetteten Bereichen zur Abscheidung von Wasser zur Verfügung. Auch das Siebgewebe umgibt die Längsachse ringförmig. Die radial außen liegenden Bereiche, in die das Siebgewebe eingebettet ist, befinden sich außenumfangseitig an der Stützstruktur. Der Wasserabscheider ist vorzugsweise mit einem erfindungsgemäßen Verfahren hergestellt worden. Der Wasserabscheider ist für eine Durchströmung von radial außen nach radial innen ausgebildet. Der Wasserabscheider kann Teil eines Filters sein. Typischerweise ist der Wasserabscheider für eine Verwendung in einem Kraftstofffilter ausgebildet. Der Wasserabscheider kann auch für eine Verwendung in einem Ölfilter vorgesehen sein. Der Wasserabscheider kann hierbei als ein Endabscheider, d. h. als letzte Stufe einer mehrstufigen Wasserabscheideeinrichtung, eingesetzt werden. Der Wasserabscheider kann radial innerhalb eines die Längsachse ringförmig umgebenden Filtermediums des Filters angeordnet sein. Zwischen dem Filtermedium und dem Wasserabscheider können eine oder mehrere Lagen aus Coalescermaterial angeordnet sein.

Das Material des Siebgewebes ist für Laserstrahlung transparent. Dies ermöglicht ein Plastifizieren des Materials der Stützstruktur mittels Laserstrahlung in radial zu der Längsachse außenseitigen Bereichen, nachdem das Siebgewebe in diesen Bereichen an der Stützstruktur angeordnet wurde. Insbesondere kann durch die Transparenz des Siebgewebes ein Erweichen des Materials des Siebgewebes auf den (der Stützstruktur zugewandten) Fügebereich begrenzt werden.

Vorteilhaft weist die Stützstruktur eine erste Längsrippe auf. Die erste Längsrippe erstreckt sich typischerweise parallel zu der Längsachse. Eine erste und eine zweite Längskante des Siebgewebes sind in die erste Längsrippe eingebettet. Mit anderen Worten sind die Längskanten in Überdeckung mit der ersten Längsrippe angeordnet. Durch die erste Längsrippe kann die Stützstruktur versteift werden. Weiterhin erlaubt die erste Längsrippe, das Siebgewebe in Umfangsrichtung geschlossen an der Stützstruktur zu befestigen.

Besonders bevorzugt weist die Stützstruktur wenigstens eine, vorzugsweise wenigstens zwei, weitere Längsrippen auf. Die weiteren Längsrippen ermöglichen eine zusätzliche Versteifung der Stützstruktur und ein Abstützen des Siebgewebes. Das Siebgewebe ist vorzugsweise nicht in die weiteren Längsrippen eingebettet. Dadurch bleibt eine besonders große hydrophobe Fläche des Siebgewebes zur Wasserabscheidung wirksam. Typischerweise liegt das Siebgewebe an den weiteren Längsrippen an. Das Siebgewebe wird dann durch die weiteren Längsrippen in radialer Richtung abgestützt. Die weiteren Längsrippen und die erste Längsrippe sind grundsätzlich in Umfangsrichtung voneinander beabstandet angeordnet.

Die Stützstruktur kann zwei ringförmige Endabschnitte aufweisen. Zwei gegenüberliegende Seitenkanten des Siebgewebes können in die Endabschnitte eingebettet sein. Durch die Endabschnitte kann eine Form des Wasserabscheiders, beispielsweise eine Kreisform, definiert und die Stützstruktur versteift werden. Typischerweise sind die Endabschnitte außenumfangseitig jeweils kreisförmig. Durch die Verbindung des Siebgewebes mit den ringförmigen Endabschnitten kann eine ebenfalls ringförmige Anordnung des Siebgewebes um die Längsachse herum eingerichtet werden.

Die Stützstruktur kann wenigstens eine, vorzugsweise wenigstens zwei, in Umfangsrichtung umlaufende Querrippe(n) aufweisen, die zwischen den Endabschnitten angeordnet ist/sind. Die Querrippen versteifen die Stützstruktur zusätzlich. Ferner kann das Siebgewebe in radialer Richtung durch die Querrippen abgestützt werden. Das Siebgewebe kann hierzu an den Querrippen anliegen. Das Siebgewebe ist vorzugsweise nicht in die Querrippe(n) eingebettet. Dadurch bleibt eine möglichst große Fläche des Siebgewebes zur Wasserabscheidung wirksam.

Die Stützstruktur weist außenumfangseitig vorteilhaft einen thermoplastischen Kunststoff auf. Der thermoplastische Kunststoff kann besonders einfach plastifiziert werden. Vorzugsweise besteht die gesamte Stützstruktur aus dem thermoplastischen Kunststoff. Die Stützstruktur kann nach der Erfindung insbesondere als ein einstückiges Spritzgussteil ausgebildet sein. Der thermoplastische Kunststoff ist besonders bevorzugt PA6, PET oder PBT, insbesondere mit einem Glasfaseranteil von maximal 35 %.

Das Siebgewebe kann hydrophob beschichtete Monofilamente aufweisen. Das Siebgewebe weist vorzugsweise (Mono-)Filamente aus PET (Polyethylenterephthalat) oder PA (Polyamid) auf. Das Siebgewebe kann miteinander verwobene Filamente aufweisen. Die Filamente des Siebgewebes können auch über- bzw. untereinander verlaufend angeordnet sein, ohne einander abwechselnd zu unter- bzw. überkreuzen. Die Filamente sind grundsätzlich an ihren Kreuzungspunkten stoffschlüssig miteinander verbunden.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigen:
- Fig. 1: einen Wasserabscheider mit einem außenumfangseitig an einer Stützstruktur angeordneten, hydrophoben Siebgewebe in einer schematischen Perspektivdarstellung;
- Fig. 2: den Wasserabscheider von Fig. 1 in einer teilgeschnittenen schematischen Seitenansicht;
- Fig. 3: den Wasserabscheider gemäß Fig. 1 und 2 in einem Zwischenstadium während seiner Herstellung in einer schematischen Perspektivansicht;
- Fig. 4: einen schematischen Ablaufplan eines Verfahrens zum Herstellen einer Vielzahl von Wasserabscheidern.

### Ausführungsform der Erfindung

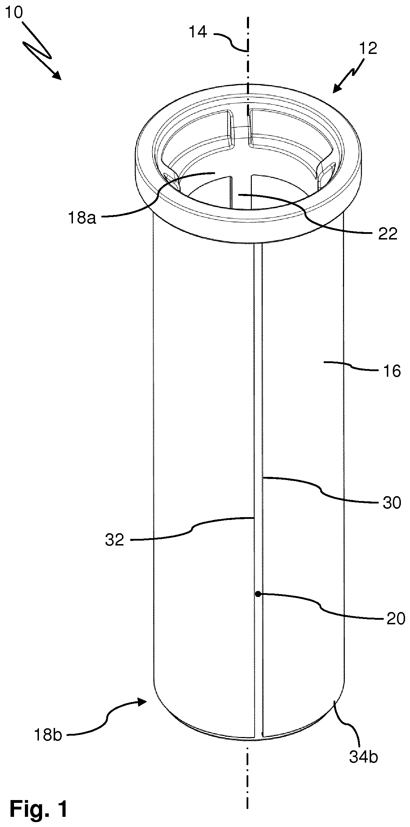

**Fig. 1** zeigt einen Wasserabscheider **10** in einer perspektivischen Ansicht. Der Wasserabscheider 10 weist eine Stützstruktur **12** auf. Die Stützstruktur 12 umgibt eine Längsachse **14** ringförmig. Der Wasserabscheider 10 weist ferner ein hydrophobes Siebgewebe **16** auf. Das Siebgewebe 16 umfasst hydrophob beschichtete Monofilamente (nicht näher dargestellt). Das Siebgewebe 16 ist außenumfangseitig an der Stützstruktur 12 angeordnet. Auch das Siebgewebe 16 umgibt die Längsachse 14 ringförmig.

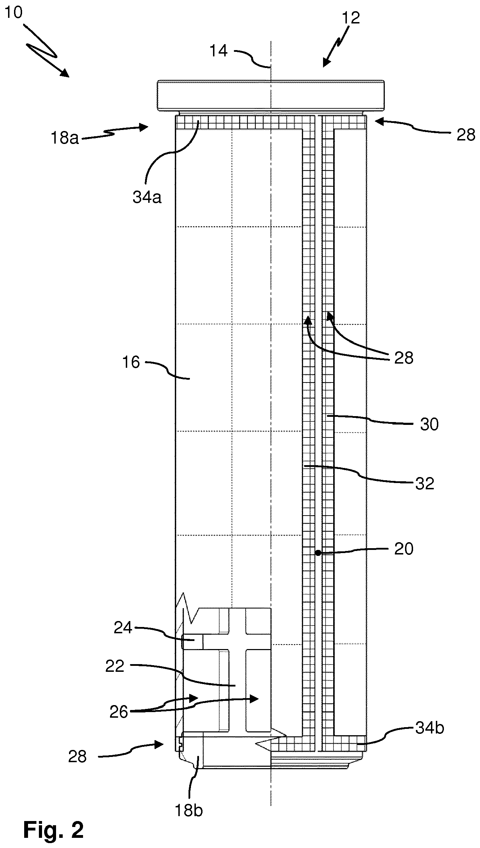

**Fig. 2** zeigt den Wasserabscheider 10 von Fig. 1 in einer teilgeschnittenen Seitenansicht. Die Stützstruktur 12 weist zwei entlang der Längsachse 14 voneinander beabstandete Endabschnitte **18a, 18b** auf. Die Endabschnitte 18a, 18b sind ringförmig, hier kreisringförmig, ausgebildet und umgreifen die Längsachse 14. Zwischen den Endabschnitten 18a, 18b erstrecken sich Längsrippen **20, 22.** Die Längsrippen 20, 22 verlaufen hier parallel zu der Längsachse 14. Die Stützstruktur 12 weist weiterhin in Umfangsrichtung um die Längsachse 14 umlaufende Querrippen **24** auf. Die Querrippen 24 verbinden die Längsrippen 20, 22 miteinander. Zwischen den Längsrippen 20, 22 und den Querrippen 24 sind Strömungsöffnungen **26** in der Stützstruktur 12 ausgebildet. Die Stützstruktur 12 ist mithin in der Art eines Gitterrohres ausgebildet. Die Strömungsöffnungen 26 nehmen einen Großteil der Umfangsfläche der Stützstruktur 12 ein. Ein Flächenanteil der Strömungsöffnungen 26 ist (bei Betrachtung in radialer Richtung) größer als ein Flächenanteil der Längs- und Querrippen 20, 22, 24.

Das Siebgewebe 16 ist radial außen an der Stützstruktur 12 angeordnet und liegt an dieser an. Das Siebgewebe 16 ist abschnittsweise in bezüglich der Längsachse 14 radial außen liegende Bereiche **28** der Stützstruktur 12 eingebettet. Die Bereiche 28, in denen das Siebgewebe 16 in die Stützstruktur 12 eingebettet ist, befinden sich radial außen an den beiden Endabschnitten 18a, 18b und außen an der ersten Längsrippe 20. Eine erste Längskante **30** und eine zweite Längskante **32** des Siebgewebes 16 sind in die erste Längsrippe 20 eingebettet. Zwei einander gegenüberliegende Seitenkanten **34a, 34b** des Siebgewebes 16 sind in die Endabschnitte 18a bzw. 18b eingebettet. Die Bereiche 28 der Einbettung sind in Fig. 2 durch ein Karomuster angedeutet. Die Bereiche der Einbettung des Siebgewebes 16 in das Material der Stützstruktur 12 bilden hier eine geschlossen umlaufende Kontur. Im Bereich der weiteren Längsrippen 22 und der Querrippen 24 ist das Siebgewebe 16 nicht in die Stützstruktur 12 eingebettet. Das Siebgewebe 16 liegt vielmehr von radial außen lose an den weiteren Längsrippen 22 und den Querrippen 24 an. Dadurch wird das Siebgewebe 16 abgestützt.

Um das Siebgewebe 16 in die Endabschnitte 18a, 18b und die erste Längsrippe 20 einzubetten, wurde das Material der Stützstruktur 12 in den Bereichen 28 plastifiziert. Hierzu wurde Laserstrahlung (Laserlicht), die von einem Laser (nicht dargestellt) ausgesandt wurde, eingesetzt. Um das Material der Stützstruktur 12 bei außenumfangseitig angeordnetem Siebgewebe 16 mittels der Laserstrahlung plastifizieren zu können, ist das Siebgewebe 16 für Laserstrahlung transparent. Die Laserstrahlung durchdringt somit das Siebgewebe 16, ohne es (nennenswert) zu erwärmen. Lediglich die radial innen hinter dem Siebgewebe 16 liegenden Bereiche 28 der Stützstruktur 12 werden durch die Laserstrahlung erwärmt und dadurch in einen plastischen Zustand überführt. Die Stützstruktur 12 weist außenumfangseitig einen thermoplastischen Kunststoff, z. B. Polyamid, auf. Ein solcher thermoplastischer Kunststoff kann durch Erwärmen in einen plastischen Zustand überführt werden. Hier besteht die gesamte Stützstruktur 12 aus dem thermoplastischen Kunststoff. Die Stützstruktur 12 ist hier als ein einstückiges Spritzgussteil ausgebildet.

Nach dem Plastifizieren wurde das Siebgewebe 16 in die plastifizierten Bereiche 28 der Stützstruktur 12 eingedrückt. Sodann wurden die plastifizierten Bereiche 28 durch Abkühlen verfestigt. Dadurch wurde eine feste Verbindung von Stützstruktur 12 und Siebgewebe 16 erhalten.

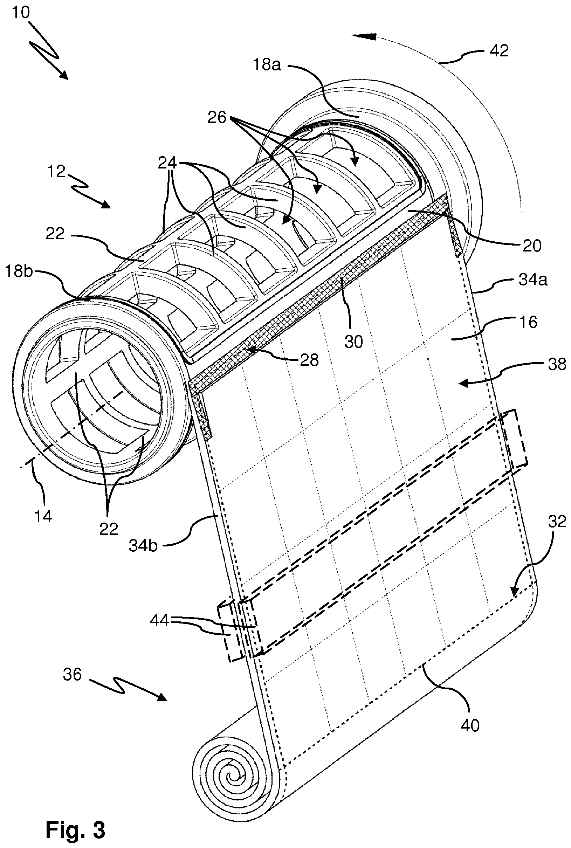

**Fig. 3** zeigt den Wasserabscheider 10 gemäß Fig. 1, 2 während seiner Herstellung. Im dargestellten Stadium des Herstellverfahrens ist die erste Längskante 30 des Siebgewebes 16 mit der ersten Längsrippe 20 der Stützstruktur 12 verbunden. Das Siebgewebe 16 wird hier als ein Endlosgewebe **36** bereitgestellt. Ein das Siebgewebe 16 des konkret herzustellenden Wasserabscheiders 10 bildender Abschnitt **38** des Endlosgewebes 36 wird im weiteren Verlauf der Herstellung entlang der Linie **40** unter Ausbildung der zweiten Längskante 32 von dem restlichen Endlosgewebe 36 (Rollenware) abgetrennt.

Zunächst wird im weiteren Verlauf des Herstellverfahrens jedoch das Siebgewebe 16 mit seinen Seitenkanten 34a, 34b in die Endabschnitte 18a, 18b eingebettet. Hierzu wird die Stützstruktur 12 in Pfeilrichtung **42** um die Längsachse 14 gedreht. Das Siebgewebe 16 wird dadurch auf die Stützstruktur 12 aufgewickelt. Die Bereiche der Endabschnitte 18a, 18b, in denen das Siebgewebe 16 gerade auf diese aufgewickelt wurde, werden mit Laserstrahlung erwärmt und dadurch plastifiziert. Die Laserstrahlung durchdringt dabei das für Laserstrahlung der verwendeten Wellenlänge transparente Siebgewebe 16. Das Siebgewebe 16 wird während des Aufwickelns auf die Stützstruktur 12 auf Spannung gehalten, beispielsweise indem das Siebgewebe 12 durch eine Bremseinrichtung **44** geführt wird. Durch diese Spannung werden die Seitenkanten 34a, 34b des Siebgewebes 16 in die plastifizierten Bereiche der Endabschnitte 18a, 18b eingedrückt. Nach einem anschließenden Abkühlen der plastifizierten Bereiche wird eine feste Verbindung erhalten.

Abschließend wird die zweite Längskante 32 des Siebgewebes 16 mit der ersten Längsrippe 20 verbunden. Die erste Längsrippe 20 wird hierzu mittels Laserstrahlung plastifiziert. Sodann wird die zweite Längskante 32 mittels eines Druckkörpers, beispielsweise einer Walze (nicht dargestellt), in die erste Längsrippe 20 eingedrückt. Nach dem Abkühlen des plastifizierten Bereichs der ersten Längsrippe 20 wird eine feste Verbindung erhalten. Auf entsprechende Weise wurde anfangs die erste Längskante 30 mit der ersten Längsrippe 20 verbunden.

Der verbleibende Teil des Endlosgewebes 36 kann zur Herstellung weiterer Wasserabscheider verwendet werden.

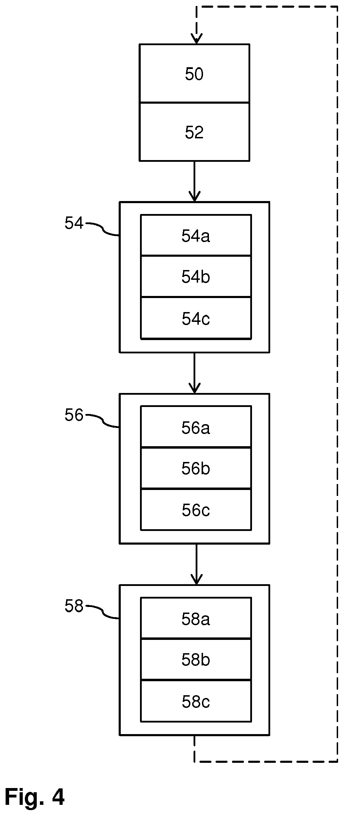

**Fig. 4** zeigt einen schematischen Ablaufplan eines Verfahrens zur Herstellung vieler Wasserabscheider 10 gemäß Fig. 1, 2. Im Verfahrensablauf stellt sich jeweils ein Stadium gemäß Fig. 3 ein.

Zunächst werden in Schritten **50** und **52** eine Stützstruktur 12 und ein hydrophobes Siebgewebe 16 in Form eines Endlosgewebes 36 bereitgestellt. Sodann wird in einem Schritt **54** eine erste Längskante 30 des Siebgewebes 16 mit einer ersten Längsrippe 20 verbunden. Hierzu wird in einem Teilschritt **54a** die erste Längskante 30 radial außen an der ersten Längsrippe 20 angeordnet. In einem Teilschritt **54b** wird das Material der Stützstruktur 12 radial außen an der ersten Längsrippe 20 plastifiziert. In einem abschließenden Teilschritt **54c** wird die erste Längskante 30 in den plastifizierten Bereich 28 der ersten Längsrippe 20 eingedrückt.

In einem anschließenden Schritt **56** werden gegenüberliegende Seitenkanten 34a, 34b des Siebgewebes 16 mit Endabschnitten 18a bzw. 18b der Stützstruktur 12 verbunden. Hierzu werden in einem Teilschritt **56a** die Seitenkanten 34a, 34b radial außen an den jeweils zugeordneten Endabschnitten 18a, 18b angeordnet. In einem Teilschritt **56b** wird das Material der Endabschnitte 18a, 18b außenumfangseitig plasifiziert. Sodann werden in einem Teilschritt **56c** die Seitenkanten 34a, 34b in das plastifizierte Material der Endabschnitte 18a, 18b eingedrückt.

In einem abschließenden Schritt **58** wird eine zweite Längskante 32 des Siebgewebes 16 mit der ersten Längsrippe 20 verbunden. Hierzu wird in einem Teilschritt **58a** die zweite Längskante 32 radial außen an der ersten Längsrippe 20 angeordnet. In einem Teilschritt **58b** wird das Material der Stützstruktur 12 radial außen an der ersten Längsrippe 20 plastifiziert. In einem abschließenden Teilschritt **58c** wird die zweite Längskante 32 in den plastifizierten Bereich 28 der ersten Längsrippe 20 eingedrückt. Die zweite Längskante 32 wird dabei unmittelbar neben der ersten Längskante 30 mit der ersten Längsrippe 20 verbunden.

Nachfolgend können auf dieselbe Weise weitere Wasserabscheider 10 hergestellt werden. Deren Siebgewebe 16 kann dabei jeweils als ein neuer Abschnitt 38 desselben Endlosgewebes 36 bereitgestellt werden.

Das Plastifizieren kann jeweils wie oben beschrieben mittels Laserstrahlung erfolgen. Alternativ kann zum Plastifizieren Ultraschall verwendet werden. Die Ultraschallwellen können mittels einer Rollsonotrode erzeugt und auf die Stützstruktur 12 übertragen werden. Mit der Rollsontrode kann das Siebgewebe auch in die plastifizierten Bereiche 28 der Stützstruktur 12 eingedrückt werden.

Die Teilschritte 54a, 56a, 58a können jeweils vor oder nach oder gleichzeitig mit den Teilschritten 54b, 56b, 58b erfolgen. Typischerweise erfolgen jeweils zuerst die Teilschritte 54a, 56a, 58a. Die Teilschritte 54c, 56c, 58c können jeweils im Wesentlichen zeitgleich mit den Teilschritten 54b, 56b, 58b oder im Anschluss an diese erfolgen.

## Patentansprüche

1. Verfahren zum Herstellen eines Wasserabscheiders (10), mit den Schritten
- Bereitstellen (50) einer Stützstruktur (12), die eine Längsachse (14) ringförmig umgibt,
- Bereitstellen (52) eines hydrophoben Siebgewebes (16),
- Plastifizieren (54b, 56b, 58b) des Materials der Stützstruktur (12) in radial zu der Längsachse (14) außenseitigen Bereichen (28) durch Ultraschall oder durch Laserstrahlung,
- Anordnen (54a, 56a, 58a) des Siebgewebes (16) außenumfangseitig an der Stützstruktur (12) und
- Eindrücken (54c, 56c, 58c) des Siebgewebes (16) in die plastifizierten Bereiche (28).

2. Verfahren nach Anspruch 1, **dadurch gekennzeichnet, dass** zum Plastifizieren eine Rollsonotrode eingesetzt wird.

3. Verfahren nach Anspruch 1, **dadurch gekennzeichnet, dass** das Material des Siebgewebes (16) für Laserstrahlung transparent ist und dass die Laserstrahlung zum Plastifizieren des Materials der Stützstruktur (12) durch das Siebgewebe (16) hindurchtritt.

4. Verfahren nach einem der vorhergehenden Ansprüche, **dadurch gekennzeichnet, dass** zum Eindrücken (54c, 56c, 58c) des Siebgewebes (16) ein Druckkörper, vorzugsweise eine Walze, verwendet wird.

5. Verfahren nach einem der vorhergehenden Ansprüche, **dadurch gekennzeichnet, dass** die Stützstruktur (12) zwei ringförmige Endabschnitte (18a, 18b) und eine erste Längsrippe (20), die sich zwischen den Endabschnitten (18a, 18b) erstreckt, aufweist und dass
- zunächst eine erste Längskante (30) des Siebgewebes (16) mit der ersten Längsrippe (20) verbunden wird (54),
- sodann zwei gegenüberliegende Seitenkanten (34a, 34b) des Siebgewebes (16) mit den Endabschnitten (18a, 18b) verbunden werden (56), und
- abschließend eine zweite Längskante (32) des Siebgewebes (16) mit der ersten Längsrippe (20) verbunden wird (58).

6. Verfahren nach Anspruch 5, **dadurch gekennzeichnet, dass** das Siebgewebe (16) als Endlosgewebe (36) bereitgestellt wird, und dass nach dem Verbinden (54) der ersten Längskante (30) des Siebgewebes (16) mit der ersten Längsrippe (20) der Stützstruktur (12) ein das Siebgewebe (16) des Wasserabscheiders (10) bildender Abschnitt (38) von dem Endlosgewebe (36) unter Ausbildung der zweiten Längskante (32) des Siebgewebes (16) abgetrennt wird.

7. Verfahren zum Herstellen einer Vielzahl von Wasserabscheidern (10) durch wiederholte Durchführung eines Verfahrens nach Anspruch 6 unter Verwendung desselben Endlosgewebes (36).

8. Wasserabscheider (10) mit einer eine Längsachse (14) ringförmig umgebenden Stützstruktur (12) und mit einem hydrophoben Siebgewebe (16), wobei das Siebgewebe (16) außenumfangseitig an der Stützstruktur (12) angeordnet ist und abschnittsweise in radial außen liegende Bereiche (28) der Stützstruktur (12) eingebettet ist und wobei das Material des Siebgewebes (16) für Laserstrahlung transparent ist.

9. Wasserabscheider (10) nach Anspruch 8, **dadurch gekennzeichnet, dass** die Stützstruktur (12) eine erste Längsrippe (20) aufweist, und dass eine erste und eine zweite Längskante (30, 32) des Siebgewebes (16) in die erste Längsrippe (20) eingebettet sind.

10. Wasserabscheider (10) nach Anspruch 9, **dadurch gekennzeichnet, dass** die Stützstruktur (12) wenigstens eine, vorzugsweise wenigstens zwei, weitere Längsrippen (22) aufweist.

11. Wasserabscheider (10) nach einem der Ansprüche 8 bis 10, **dadurch gekennzeichnet, dass** die Stützstruktur (12) zwei ringförmige Endabschnitte (18a, 18b) aufweist und dass zwei gegenüberliegende Seitenkanten (34a, 34b) des Siebgewebes (16) in die Endabschnitte (18a, 18b) eingebettet sind.

12. Wasserabscheider (10) nach Anspruch 11, **dadurch gekennzeichnet, dass** die Stützstruktur (12) wenigstens eine, vorzugsweise wenigstens zwei, in Umfangsrichtung umlaufende Querrippe(n) (24) aufweist, die zwischen den Endabschnitten (18a, 18b) angeordnet ist/sind.

13. Wasserabscheider (10) nach einem der Ansprüche 8 bis 12, **dadurch gekennzeichnet, dass** die Stützstruktur (12) außenumfangseitig einen thermoplastischen Kunststoff aufweist.

14. Wasserabscheider (10) nach einem der Ansprüche 8 bis 13, **dadurch gekennzeichnet, dass** das Siebgewebe (16) hydrophob beschichtete Monofilamente aufweist.

## Claims

1. Method for manufacturing a water separator (10), including the following steps
- providing (50) a support structure (12) annularly surrounding a longitudinal axis (14),
- providing (52) a hydrophobic screen mesh (16),
- plasticizing (54b, 56b, 58b) the material of the support structure (12) in areas (28) radially exterior with respect to the longitudinal axis (14) by ultrasound or by laser radiation,
- arranging (54a, 56a, 58a) the screen mesh (16) at the outer periphery on the support structure (12) and
- pressing (54c, 56c, 58c) the screen mesh (16) into the plasticized areas (28).

2. Method according to claim 1, **characterized in that** a rolling sonotrode is used for plasticizing.

3. Method according to claim 1, **characterized in that** the material for the screen mesh (16) is transparent to laser radiation and **in that** the laser radiation penetrates the screen mesh (16) for plasticizing the material of the support structure (12).

4. Method according to one of the preceding claims, **characterized in that** a pressure body, preferably a roller, is used for pressing (54c, 56c, 58c) the screen mesh (16).

5. Method according to one of the preceding claims, **characterized in that** the support structure (12) features two ring-shaped end portions (18a, 18b) and a first longitudinal rib (20) extending between the end portions (18a, 18b) and **in that**
- first of all, a first longitudinal edge (30) of the screen mesh (16) is connected (54) to the first longitudinal rib (20),
- then, two opposing lateral edges (34a, 34b) of the screen mesh (16) are connected (56) to the end portions (18a, 18b) and
- finally, a second longitudinal edge (32) of the screen mesh (16) is connected (58) to the first longitudinal rib (20).

6. Method according to claim 5, **characterized in that** the screen mesh (16) is provided as continuous mesh (36), and **in that** after connecting (54) the first longitudinal edge (30) of the screen mesh (16) to the first longitudinal rib (20) of the support structure (12) a portion (38) forming the screen mesh (16) of the water separator (10) is separated from the continuous mesh (36) by forming the second longitudinal edge (32) of the screen mesh (16).

7. Method for manufacturing a plurality of water separators (10) by repeatedly performing a method according to claim 6 by using the same continuous mesh (36).

8. Water separator (10) having a support structure (12) annularly surrounding a longitudinal axis (14) and having a hydrophobic screen mesh (16), wherein the screen mesh (16) is disposed at the outer periphery on the support structure (12) and incorporated sectionwise in radially external areas (28) of the support structure (12) and wherein the material of the screen mesh (16) is transparent to laser radiation.

9. Water separator (10) according to claim 8, **characterized in that** the support structure (12) features a first longitudinal rib (20), and **in that** a first and a second longitudinal edge (30, 32) of the screen mesh (16) are incorporated in the first longitudinal rib (20).

10. Water separator (10) according to claim 9, **characterized in that** the support structure (12) features at least one, preferably at least two further longitudinal ribs (22).

11. Water separator (10) according to one of the claims 8 to 10, **characterized in that** the support structure (12) features two ring-shaped end portions (18a, 18b) and **in that** two opposing lateral edges (34a, 34b) of the screen mesh (16) are incorporated in the end portions (18a, 18b).

12. Water separator (10) according to claim 11, **characterized in that** the support structure (12) features at least one, preferably at least two circumferential transverse ribs (24) disposed between the end portions (18a, 18b).

13. Water separator (10) according to one of the claims 8 to 12, **characterized in that** the support structure (12) features thermoplastics at the outer periphery.

14. Water separator (10) according to one of the claims 8 to 13, **characterized in that** the screen mesh (16) features hydrophobically coated monofilaments.

## Revendications

1. Procédé de fabrication d'un séparateur d'eau (10), comprenant les étapes suivantes
- mise à disposition (50) d'une structure de support (12), qui entoure de manière annulaire un axe longitudinal (14),
- mise à disposition (52) d'un tissu de tamis hydrophobe (16),
- plastification (54b, 56b, 58b) du matériau de la structure de support (12) dans des zones radialement extérieures (28) à l'axe longitudinal (14) par rayonnement ultrasonique ou laser,
- placement (54a, 56a, 58a) du tissu de tamis (16) à la périphérie extérieure de la structure de support (12) ; et
- enfoncement (54c, 56c, 58c) du tissu de tamis (16) dans les zones plastifiées (28).

2. Procédé selon la revendication 1, **caractérisé en ce qu'**une sonotrode à rouleaux est utilisée pour la plastification.

3. Procédé selon la revendication 1, **caractérisé en ce que** le matériau du tissu de tamis (16) est transparent au rayonnement laser et **en ce que**, pour plastifier le matériau de la structure de support (12), le rayonnement laser traverse le tissu de tamis (16).

4. Procédé selon l'une quelconque des revendications précédentes, **caractérisé en ce que,** pour enfoncer (54c, 56c, 58c) le tissu de tamis (16), un moyen de pression, de préférence un rouleau, est utilisé.

5. Procédé selon l'une quelconque des revendications précédentes, **caractérisé en ce que** la structure de support (12) présente deux sections d'extrémité annulaires (18a, 18b) et une première nervure longitudinale (20) s'étendant entre les sections d'extrémité (18a, 18b), et **en ce que**
- d'abord un premier bord longitudinal (30) du tissu de tamis (16) est relié (54) à la première nervure longitudinale (20),
- ensuite deux bords latéraux opposés (34a, 34b) du tissu de tamis (16) sont reliés (56) aux sections d'extrémité (18a, 18b), puis
- finalement, un second bord longitudinal (32) du tissu de tamis (16) est relié (58) à la première nervure longitudinale (20).

6. Procédé selon la revendication 5, **caractérisé en ce que** le tissu de tamis (16) est mis à disposition en tant que tissu sans fin (36), et **en ce qu'**après la liaison (54) du premier bord longitudinal (30) du tissu de tamis (16) à la première nervure longitudinale (20) de la structure de support (12) une section (38) formant le tissu de tamis (16) du séparateur d'eau (10) est séparée du tissu sans fin (36) en formant le second bord longitudinal (32) du tissu de tamis (16).

7. Procédé de fabrication d'une pluralité de séparateurs d'eau (10) par l'exécution répétée d'un procédé selon la revendication 6 en utilisant le même tissu sans fin (36).

8. Séparateur d'eau (10) ayant une structure de support (12) entourant un axe longitudinal (14) de manière annulaire et ayant un tissu de tamis (16) hydrophobe, dans lequel le tissu de tamis (16) est disposé à la périphérie extérieure sur la structure de support (12) et incorporé sur certaines sections dans des sections radialement extérieures (28) de la structure de support (12) et dans lequel le matériau du tissu de tamis (16) est transparent au rayonnement laser.

9. Séparateur d'eau (10) selon la revendication 8, **caractérisé en ce que** la structure de support (12) présente une première nervure longitudinale (20), et **en ce qu'**un premier et un second bords longitudinaux (30, 32) du tissu de tamis (16) sont incorporés dans la première nervure longitudinale (20).

10. Séparateur d'eau (10) selon la revendication 9, **caractérisé en ce que** la structure de support (12) présente au moins une, de préférence au moins deux autres nervures longitudinales (22).

11. Séparateur d'eau (10) selon l'une quelconque des revendications 8 à 10, **caractérisé en ce que** la structure de support (12) présente deux sections d'extrémité annulaires (18a, 18b) et **en ce que** deux bords latéraux opposés (34a, 34b) du tissu de tamis (16) sont incorporés dans les sections d'extrémité (18a, 18b).

12. Séparateur d'eau (10) selon la revendication 11, **caractérisé en ce que** la structure de support (12) présente au moins une, de préférence au moins deux nervures transversales (24) disposées entre les sections d'extrémité (18a, 18b).

13. Séparateur d'eau (10) selon l'une quelconque des revendications 8 à 12, **caractérisé en ce que** la structure de support (12) présente à la périphérie extérieure une matière thermoplastique.

14. Séparateur d'eau (10) selon l'une quelconque des revendications 8 à 13, **caractérisé en ce que** le tissu de tamis (16) présente un monofilament à revêtement hydrophobe.
